# EUROPEAN PATENT APPLICATION

(11) **EP 3 672 269 A1**
(43) Date of publication of application: **24.06.2020**
(21) Application number: 18214499.8
(22) Date of filing: 20.12.2018
(51) Int. Cl.: H04Q 9/00

(54) **EVALUATION DEVICE FOR EVALUATION AN EMERGENCY SYSTEM OF A FLUID TRANSFER DEVICE**

(71) Applicant: Endress+Hauser S.A.S., 68331 Huningue Cedex (FR)
(72) Inventor: Roy, Eric, 69390 Millery (FR); Dreyer, Frédéric, 13330 Pélissanne (FR)
(74) Representative: Andres, Angelika Maria

(57) **Abstract**

The invention relates to an evaluation device (10) for evaluating an emergency system (2) of a fluid transfer device (1) comprising:
- a first signal port (12) adapted to be connected to a metering device (3) for receiving a first metering signal (MS1),
- a second signal port (14) adapted to be connected to the emergency system (2) for communication between the evaluation device (10) and the emergency system (2),
- an evaluation unit (16) connected to the first signal port (12) and connected to the second signal port (14),
wherein the evaluation unit (16) is adapted to receive a control signal (CS) via the second signal port (14) from the emergency system (2),
wherein the evaluation unit (16) is adapted to modify the control signal (CS) to a modified control signal (MCS),
wherein the evaluation unit (16) is adapted to send the control signal (CS) or the modified control signal (MCS) at the second signal port (14) to the emergency system (2).

## Description

The invention relates to an evaluation device for evaluating an emergency system of a fluid transfer device, an evaluation system for evaluating an emergency system of a fluid transfer device and an evaluation method for evaluating an emergency system of a fluid transfer device.

In the field of fluid transfer, especially in the field of fuel transfer from a fuel depot to a tank truck or a tank ship, precise and secure fuel transfer is indispensable. In general, the person supervising the fluid transfer programs the amount of fuel to be transferred, for example 3000 I for a tank truck. An overflow of the tank may occur in case the amount of fuel to be transferred is erroneously programmed higher than the capacity of the tank truck, or in case the tank truck is already partially filled with fuel, or in case the fluid meter metering the fluid transfer is not metering correctly.

However, an overflow of the tank truck or the tank ship must be prevented for environmental and economic reasons under any circumstances. For this reason, existing fuel transfer devices are equipped with an emergency system to prevent any overflow in the tank receiving the fuel. The emergency system comprises an emergency valve and a sensor allowing for detection of an imminent overflow of the tank. An imminent overflow of the tank is detected, for example if only 1% or less of the total tank volume is not yet filled. In order to detect the imminent overflow, the emergency system sends a control signal to the sensor positioned inside the tank at a position corresponding to 99% of the total tank volume. If the sensor is not in contact with the fuel, the sensor returns the control signal to the emergency system. If the sensor comes into contact with the fuel, the sensor stops returning the control signal to the emergency system. This means, the sensor has detected an imminent overflow. Then, the emergency system immediately closes the emergency valve to stop the fuel transfer. The emergency valve must be closed within a very short time, for example a few milliseconds, because the flow rate of the fluid may be very high, for example up to about 140 m³ per hour.

In case the reaction period of the emergency system, i.e. the time to close the emergency valve is longer than a predefined time interval, an overflow of the tank may occur. Therefore, there is a need for regularly evaluating whether the emergency system of the fluid transfer device allows for closing the emergency valve in the predefined time interval.

An objective of the present invention is to provide an evaluation device for evaluating an emergency system of a fluid transfer device.

This objective is achieved by the evaluation device according to claim 1.

The evaluation device according to the invention for evaluating an emergency system of a fluid transfer device comprises:
- a first signal port adapted to be connected to a metering device for receiving a first metering signal,
- a second signal port adapted to be connected to the emergency system for communication between the evaluation device and the emergency system,
- an evaluation unit connected to the first signal port and connected to the second signal port.

The evaluation unit is adapted to receive a control signal via the second signal port from the emergency system. The evaluation unit is adapted to modify the control signal to a modified control signal. The evaluation unit is adapted to send the control signal or the modified control signal at the second signal port to the emergency system.

One advantage of the evaluation device according to the invention is that the fluid transferred during the closing of the emergency valve can precisely be measured by the evaluation device. This allows for evaluating whether or not an overflow of the tank receiving the fluid can be prevented by the emergency system.

According to one embodiment, the evaluation device further has a first display adapted to display the first metering signal being received at the first signal port.

According to one embodiment, the evaluation device has a first switch,
wherein the second signal port has a receiving port adapted to receive the control signal from the emergency system and a sending port adapted to send the control signal to the emergency system. The receiving port and the sending port are connected by the first switch.

According to one embodiment, the evaluation device has a third signal port 13 connected to the evaluation unit, a second switch and a second display. The third signal port 13 is adapted to be connected to the metering device for receiving a second metering signal. The second switch is adapted to disconnect the third signal port from evaluation unit. The second display is adapted to display the second metering signal.

According to one embodiment, the first switch and the second switch are embodied as a double pole switch.

The above-mentioned objective is also achieved by an evaluation system for evaluating an emergency system of a fluid transfer device according to claim 6.

The evaluation system according to the invention for evaluating an emergency system of a fluid transfer device comprising:
- a pipe system for transporting a fluid to be transferred,
   wherein the pipe system has an inlet adapted to be connected to a first reservoir containing the fluid to be transferred,
   wherein the pipe system has an outlet adapted to be connected to a second reservoir adapted to receive the fluid to be transferred,
   wherein the pipe system has a metering device adapted to meter the fluid transported in the pipe system,
wherein the metering device is adapted to send a first metering signal representative of the transferred fluid,
- an evaluation device according to the invention,
   wherein the first signal port of the evaluation device is connected to the metering device in order to receive the first metering signal.

The above-mentioned objective is also achieved by an evaluation method for evaluating an emergency system of a fluid transfer device according to claim 7.

The evaluation method according to the invention for evaluating an emergency system of a fluid transfer device comprising at least the following steps:
- providing an evaluation system according to the invention,
   wherein the inlet of the pipe system is connected to the first reservoir containing the fluid to be transferred,
   wherein the outlet of the pipe system is connected to the second reservoir adapted to receive the fluid to be transferred,
   wherein the second signal port of the evaluation device is connected to the emergency system of the fluid transfer device,
   wherein the emergency system of the fluid transfer device comprises an emergency valve adapted to stop a fluid outflow of the first reservoir,
- transporting the fluid from the first reservoir to the second reservoir via the pipe system,
- metering the fluid transported by the pipe system using the metering device,
- sending the first metering signal from the metering device to the evaluation device at a start moment,
- receiving the control signal at the second signal port of the evaluation device,
- modifying the control signal to a modified control signal,
- sending the modified control signal at the second signal port to the emergency system or stop sending the control signal at the second signal port at a first moment, such that the emergency system detects an emergency and stops the fluid transport from the first reservoir to the second reservoir by closing the emergency valve,
- evaluating the first metering signal received from the metering device during the first moment and a second moment at which the emergency valve is completely closed.

According to one embodiment, the step of stop sending the control signal at the second signal port of the evaluation device to the emergency system is performed by opening the first switch.

According to one embodiment, the evaluation method comprises a step of
- displaying on the first display a first incremented metering signal representing a quantity of measured fluid between the first moment and the second moment.

The invention will now be explained in greater detail based on the appended drawing, the figures of which show as follows:
- Fig. 1: shows a schematically view of a fluid transfer device and of an evaluation system according to the invention;
- Fig. 2: shows a schematically view of the fluid transfer device of Figure 1 with a specific embodiment of the evaluation system;
- Fig. 3: is a schematically signal diagram showing a first and second metering signal and a flow rate; and
- Fig. 4: is a schematically signal diagram showing a control signal and two modified control signals.

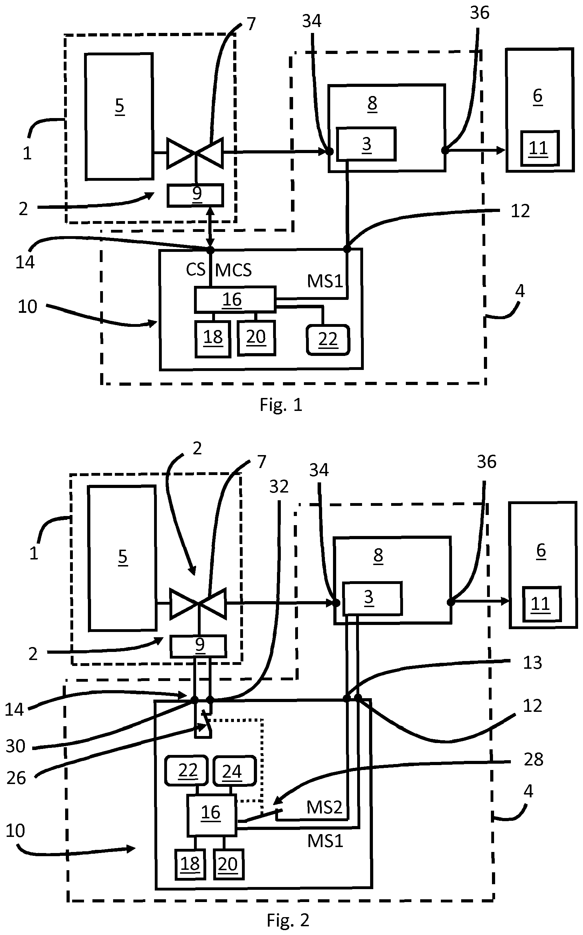

Figure 1 shows a fluid transfer device 1, an evaluation system 4 and a second reservoir 6. The second reservoir 6 is for example a tank truck or a tank ship or any other vessel to be filled with a fluid. The second reservoir 6 may be equipped with a sensor 11 for detecting an imminent overflow.

The fluid transfer device 1 has an emergency system 2 and a first reservoir 5 filled with the fluid to be transferred. The fluid transfer device 1 may comprise a pump (not shown) for transferring the fluid out of the first reservoir 5.

The emergency system 2 is configured to interrupt a fluid transfer from the first reservoir 5 to the second reservoir 6 if an imminent overflow of the second reservoir 6 is detected. The emergency system 2 has an emergency valve 7 and a controller 9. The emergency valve 7 is configured to stop the fluid transfer of the transfer device 1. The controller 9 controls the emergency valve 7 and is adapted to generate a control signal CS which is sent to the evaluation system 4. The control signal CS may of course also be send to the sensor 11 of the second reservoir 6 via a communication line in case the fluid transfer device is not evaluated by the evaluation system 4. In this case, the sensor 11 informs the emergency system 2 if an imminent overflow of the second reservoir 6 is detected.

However, in order to evaluate the emergency system 2, it is sufficient to only send the control signal CS to the evaluation device 10. Depending on the control signal CS, the emergency system 2 will close the emergency valve 7. The method of evaluating the emergency system 2 will be described in more detail below.

The evaluation system 4 comprises a pipe system 8 and an evaluation device 10. The pipe system 8 has an inlet 34, an outlet 36 and a metering device 3. The inlet 34 is connected to the fluid transfer device 1, in particular to the emergency valve 7. The outlet 36 is connected to the second reservoir 6. The metering device 3 is adapted to meter the fluid transferred from the fluid transfer device 1 to the second reservoir 6. The pipe system 8 is connected with the evaluation device 10 in order to communicate the metered fluid from the metering device 3 to the evaluation device 10 in form of at least a first metering signal MS1 (see figure 1).

The evaluation device 10 has a first signal port 12, a second signal port 14, an evaluation unit 16, a first storage 18, a second storage 20 and a first display 22. The first signal port 12 is connected to the pipe system 8, in particular connected to the metering device 3. The second signal port 14 is connected to the emergency system 2.

Figure 1 shows that the evaluation unit 16 is connected with the first signal port 12 and the second signal port 14, the first storage 18, the second storage 20 and the first display 22. The evaluation unit 16 is for example a microcontroller. The evaluation unit 16 is adapted to save the first metering signal MS1 received at the first signal port 12 in the first storage 18 or in the second storage 20. The first storage 18 and the second storage 20 are for example separate physical read-only memory (ROM) storages. Alternatively, the first storage 18 and the second storage 20 are registers in a random-access memory (RAM) of a same storage device.

The evaluation unit 16 is also adapted to display the first metering signal MS1 on the first display 22. The first metering signal MS1 may be displayed in a form derived from the first metering signal MS1. For example, the first metering signal MS1 is displayed as a measuring value corresponding to the first metering signal MS1. For example, the measuring value may be expressed in the measuring unit volume or mass.

The evaluation unit 16 is adapted to receive a control signal CS via the second signal port 14 from the emergency system 2. The control signal CS is for example an electrical analog signal. The analog signal is for example an electrical current in the range of 3 mA to 20 mA.

The evaluation unit 16 is adapted to modify the control signal CS to a modified control signal MCS. The modified control signal MCS is for example an electrical current signal in the range of 0 mA to less than 3 mA. For example, the modified control signal is 0 mA. The evaluation unit 16 is adapted to send the control signal CS or the modified control signal MCS at the second signal port 14 to the emergency system 2.

The first display 22 is adapted to display the first metering signal MS1, which is received at the first signal port 12.

The evaluation unit 16 is adapted to increment the first metering signal MS1 to a first incremented metering signal S1 and to display the incremented metering signal S1 on the first display 22. The evaluation unit 16 may also save the first metering signal MS1 and/or the first incremented metering signal S1 in the first storage 18 or the second storage 20.

Figure 2 shows an embodiment in which the evaluation device 10 further comprises a second display 24, a first switch 26, a second switch 28 and a third signal port 13. The second signal port 14 of the evaluation device 10 comprises a receiving port 30 and a sending port 32.

The receiving port 30 is adapted to receive the control signal CS from the emergency system 2, in particular from the controller 9. The sending port 32 is adapted to send the control signal CS or the modified control signal MCS to the emergency system 2, in particular to the controller 9.

The first switch 26 is adapted to connect/disconnect the receiving port 30 with the sending port 32. The third signal port 13 is connected to the pipe system 8 in order to receive a second metering signal MS2 from the metering device 3. The second metering signal MS2 is identical to the first metering signal MS1. The second switch 28 connects the third signal port 13 with the evaluation unit 16 and is adapted to connect/disconnect the third signal port 13 from the evaluation unit 16.

The first switch 26 and the second switch 28 are controlled by the evaluation unit 16, which is indicated in figure 2 by the dotted lines. The first switch 26 and the second switch 28 are embodied for example as a double pole switch.

The second display 24 is connected to the evaluation unit 16 and is adapted to display the second metering signal MS2. Of course, the second metering signal MS2 can also be displayed in a derived form, as explained above regarding the first metering signal MS1.

The evaluation method for evaluating the emergency system 2 is described now.

In a first step, the above-described evaluation system 4 is provided in a ready-to-use state. This means, the evaluation system 4 is connected to the fluid transfer device 1 and to the second reservoir 6. In detail, the inlet 34 of the pipe system 8 is connected to the first reservoir 5 containing the fluid to be transferred. Also, the outlet 36 of the pipe system 8 is connected to the second reservoir 6, adapted to receive the fluid to be transferred. Furthermore, the second signal port 14 of the evaluation device 10 is connected to the emergency system 2 of the fluid transfer device 1.

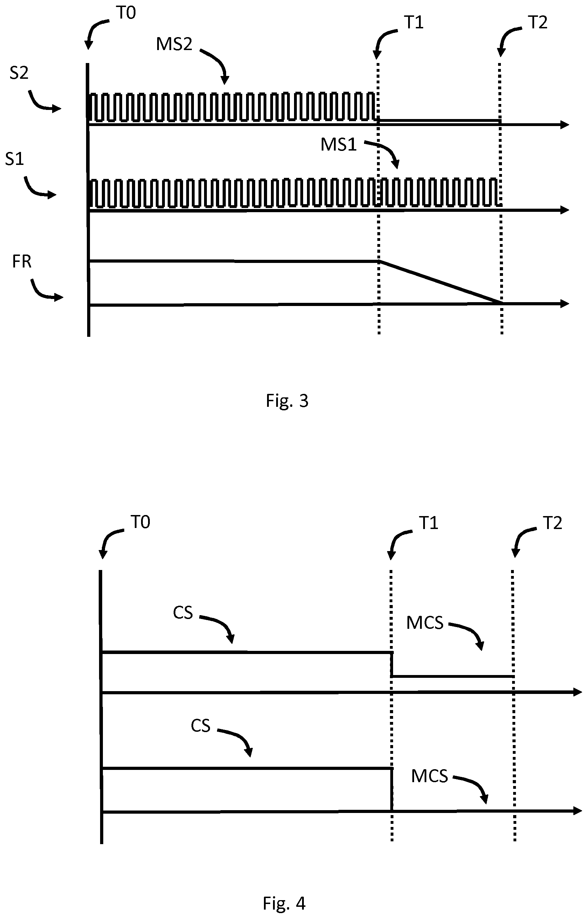

In a second step, the fluid transported by the pipe system 8 is metered, using the metering device 3. This implies that the fluid from the first reservoir 5 is transported via the pipe system 8 to the second reservoir 6. During the metering of the fluid by the metering device 3, the first metering signal MS1 is send from the metering device 3 to the first signal port 12 of the evaluation device 10 (see figure 1). The begin of the fluid transfer is indicated in figures 3 and 4 with the start moment T0.

The evaluation unit 16 then may convert the first metering signal MS1 in a value derived of the first metering signal MS1, for example a fist measured value of a measurement unit, for example a volume quantity or a mass quantity. The first metering signal MS1 is used by the evaluation unit 16 in order to obtain the first incremented metering signal S1. The first incremented metering signal S1 is a summation of the received first metering signal MS1 and represents the total amount of fluid transferred by the fluid transfer device 1.

The evaluation unit 16 may store the first metering signal MS1 and/or the first incremented metering signal S1 in a first storage 18.

The evaluation unit 16 displays the first metering signal MS1 and/or the first incremented metering signal S1 on the first display 22.

The emergency system 2 of the fluid transfer device 1 communicates with the evaluation device 10 by the second signal port 14 of the evaluation device 10 during the fluid transport. This communication includes receiving of the control signal CS by the evaluation device 10 from the emergency system 2 and sending the control signal CS or sending a modified control signal MCS from the evaluation device 10 to the emergency system 2.

In detail, the emergency system 2 sends the control signal CS to the evaluation device 10. The evaluation device 10 receives the control signal CS at the second signal port 14. The evaluation device 10 is adapted to send the same control signal CS back to the emergency system 2 or to send a modified control signal MCS back to the emergency system 2.

In case the evaluation unit 10 sends the same control signal CS back to the emergency system 2, the fluid transfer continues, in case the evaluation unit 10 sends the modified control signal MCS back to the emergency system 2, the fluid transfer is interrupted by the emergency system 2.

Figure 4 schematically shows the control signal CS and the modified control signal MCS, which are send from the evaluation unit 10 to the emergency system 2. The upper signal diagram of figure 4 comprises a modified control signal MCS being lower than the control signal CS, for example the modified control signal MCS is 3 mA. The lower signal diagram of figure 4 comprises a modified control signal MCS being zero.

In case the evaluation unit 10 modifies the control signal at a moment T1 and sends the modified control signal MCS back to the emergency system 2, the emergency system 2 detects an emergency and stops the fluid transfer. In other words, the controller 9 commands the emergency valve 7 to close at a moment T1.

The modified signal MCS may be lower than a predefined threshold, e.g. 3 mA. The modified control signal MCS may be equal to 0 mA. If the modified control signal MSC is equal to 0 mA, this means, the evaluation unit 10 stops sending the control signal CS to the emergency system 2. In other words, the sending of the control signal CS is interrupted by the evaluation device 10.

At the moment T1, the evaluation device 10 sends a modified control signal MCS or stops sending the control signal CS, such that the emergency system 2 detects an emergency and closes the emergency valve 7.

At the moment T1, the evaluation unit 16 may store the first incremented metering signal S1 in the first storage 18. At the moment T1, the flow rate FR of the fluid is for example at a maximum possible flow rate FR of the fluid transfer device 1. This allows to evaluate the emergency system 2 under extreme conditions.

However, during the time interval the emergency valve 7 is closing, the fluid continues to be transferred from the fluid transfer device 1 to the second reservoir 6. The flow rate FR of the fluid decreases during the closing of the emergency valve 7 (see figure 3).

At the moment T2, the emergency valve 7 is completely closed and the flow rate FR of the fluid is zero (see figure 3).

At the moment T2, the summation of the first metering signal MS1 to the first incremented metering signal S1 is stopped. The first incremented metering signal S1 is stored for example in the second storage 20.

Then the evaluation unit 16 may display at the first display 22 the first incremented metering signal S1 representing the fluid transferred during the time interval defined by the start moment T0 and the second moment T2.

The evaluation unit 16 is configured to calculate the quantity of fluid transferred during the closing of the emergency valve 7, which is defined by the time interval between the first moment T1 and the second moment T2. The quantity of the transferred fluid can be calculated for example by using the first incremented metering signal S1 stored in the first storage 18 at the first moment T1 and the first incremented metering signal S1 stored in the second storage 20 at the second moment T2. The difference between these two stored values represents the quantity of fluid transferred from the first reservoir 5 to the second reservoir 6 during the closing of the emergency valve 7.

Then the evaluation unit 16 may display at the first display 22 the first incremented metering signal S1 at the first moment T1 and/or the first incremented metering signal S1 at the second moment T2 and/or the difference between these two signals.

The alternative evaluation method for evaluating the emergency system 2 using the alternative embodiment shown in Figure 2 is described now.

The alternative evaluation method differs from the previously described one in that a second metering signal MS2 is received at the third signal port 13 and that a first switch 26 and a second switch 28 are used and that the second metering signal MS2 is displayed on the second display 24.

In detail, the metering device 3 sends in addition to the first metering signal MS1 the second metering signal MS2 to the third signal port 13. The first metering signal MS1 and the second metering signal MS2 are identical.

The first metering signal MS1 is used by the evaluation unit 16 in order to obtain a second incremented metering signal S2. The second incremented metering signal S2 is a summation of the received second metering signal MS2 and represents the total amount of fluid transferred by the fluid transfer device 1.

Figure 3 schematically shows the first incremented metering signal S1 and the second incremented metering signal S2. Figure 3 also schematically shows the flow rate FR of the fluid transferred from the first reservoir 5 to the second reservoir 6.

The evaluation unit 16 displays the second incremented metering signal S2 on the second display 24. The evaluation unit 16 may also save the second metering signal MS2 and/or the second incremented metering signal S2 in the first storage 18 or the second storage 20.

The second metering signal MS2 may be displayed in a form derived from the second metering signal MS2. For example, the second metering signal MS2 is displayed as a measuring value corresponding to the second metering signal MS2. For example, the measuring value may be expressed in the measuring unit volume or mass.

At the first moment T1, the evaluation unit 16 commands the first switch 26 and the second switch 28 to open simultaneously. Opening the first switch 26 implies interrupting the control signal CS. Thus, the modified control signal MCS is equal to zero. In consequence, the emergency system 2 stops the fluid transfer by closing the emergency valve 7. In consequence, the second metering signal MS2 is no longer received by the evaluation unit 16. Thus, the evaluation unit 16 no longer increments the second incremented metering signal S2. The evaluation unit 16 displays the second incremented metering signal S2 or a derived value thereof on the second display 24.

During the emergency valve 7 is closing, the metering device 3 continues sending the first metering signal MS1 to the evaluation device 10 (see figure 3). The evaluation unit 16 continues incrementing the first incremented metering signal S1 until the moment T2.

At the moment T2, the emergency valve 7 is completely closed and the flow rate FR of the transferred fluid is zero. In consequence, at the moment T2, the first metering signal MS1 is zero too. The first incremented metering signal S1 is no longer incremented.

The evaluation unit 16 displays the first incremented metering signal S1 on the first display 22. The evaluation unit 16 also displays the second incremented metering signal S2 on the second display 24. A user is now able to calculate the amount of fluid transferred during the emergency valve 7 was closing, which is the time interval between the first moment T1 and the second moment T2. In other words, the amount of fluid transferred during the emergency valve 7 was closing can be calculated by subtracting the displayed value on the second display 24 from the displayed value on the first display 22.

In one optional embodiment of the evaluation method, it is possible to only command the first switch 26 by the evaluation unit 16. In this case, the evaluation unit 16 stores the first metering signal MS1 and/or the first incremented metering signal S1 in the first storage 18 from the start moment T0 until the first moment T1. Once the evaluation unit 16 opens the first switch 26, the first metering signal MS1 and/or the first incremented metering signal S1 is stored in the second storage 20. The evaluation unit 16 then calculates the quantity of fluid transferred between the first moment T1 and the second moment T2 as described above using the stored values in the first storage 18 and the second storage 20.

## Claims

1. Evaluation device (10) for evaluating an emergency system (2) of a fluid transfer device (1) comprising:
- a first signal port (12) adapted to be connected to a metering device (3) for receiving a first metering signal (MS1),
- a second signal port (14) adapted to be connected to the emergency system (2) for communication between the evaluation device (10) and the emergency system (2),
- an evaluation unit (16) connected to the first signal port (12) and connected to the second signal port (14),
∘ wherein the evaluation unit (16) is adapted to receive a control signal (CS) via the second signal port (14) from the emergency system (2),
∘ wherein the evaluation unit (16) is adapted to modify the control signal (CS) to a modified control signal (MCS),
∘ wherein the evaluation unit (16) is adapted to send the control signal (CS) or the modified control signal (MCS) at the second signal port (14) to the emergency system (2).

2. Evaluation device (10) according to claim 1, wherein the evaluation device (10) further has a first display (22) adapted to display the first metering signal (MS1) being received at the first signal port (12).

3. Evaluation device (10) according to any one of the preceding claims, wherein the evaluation device (10) has a first switch (26),
wherein the second signal port (14) has a receiving port (30) adapted to receive the control signal (CS) from the emergency system (2) and a sending port (32) adapted to send the control signal (CS) to the emergency system (2),
wherein the receiving port (30) and the sending port (32) are connected by the first switch (26).

4. Evaluation device (10) according to claim 3, wherein the evaluation device (10) has a third signal port 13 connected to the evaluation unit (16), a second switch (28) and a second display (24),
∘ wherein the third signal port 13 is adapted to be connected to the metering device (3) for receiving a second metering signal (MS2),
∘ wherein the second switch (28) is adapted to disconnect the third signal port (13) from evaluation unit (16), and
∘ wherein the second display (24) is adapted to display the second metering signal (MS2).

5. Evaluation device (10) according to claim 3 and 4, wherein the first switch (26) and the second switch (28) are embodied as a double pole switch.

6. Evaluation system (4) for evaluating an emergency system (2) of a fluid transfer device comprising:
- a pipe system (8) for transporting a fluid to be transferred,
∘ wherein the pipe system (8) has an inlet (34) adapted to be connected to a first reservoir (5) containing the fluid to be transferred,
∘ wherein the pipe system (8) has an outlet (36) adapted to be connected to a second reservoir (6) adapted to receive the fluid to be transferred,
∘ wherein the pipe system (8) has a metering device (3) adapted to meter the fluid transported in the pipe system (8),
wherein the metering device (3) is adapted to send a first metering signal (MS1) representative of the transferred fluid,
- an evaluation device (10) according to one of the preceding claims,
∘ wherein the first signal port (12) of the evaluation device (10) is connected to the metering device (3) in order to receive the first metering signal (MS1).

7. Evaluation method for evaluating an emergency system (2) of a fluid transfer device comprising at least the following steps:
- providing an evaluation system (4) according to claim 6,
∘ wherein the inlet (34) of the pipe system (8) is connected to the first reservoir (5) containing the fluid to be transferred,
∘ wherein the outlet (36) of the pipe system (8) is connected to the second reservoir (6) adapted to receive the fluid to be transferred,
∘ wherein the second signal port (14) of the evaluation device (10) is connected to the emergency system (2) of the fluid transfer device (1),
∘ wherein the emergency system (2) of the fluid transfer device (1) comprises an emergency valve (7) adapted to stop a fluid outflow of the first reservoir (5),
- transporting the fluid from the first reservoir (5) to the second reservoir (6) via the pipe system (8),
- metering the fluid transported by the pipe system (8) using the metering device (3),
- sending the first metering signal (MS1) from the metering device (3) to the evaluation device (10) at a start moment (TO),
- receiving the control signal (CS) at the second signal port (14) of the evaluation device (10),
- modifying the control signal (CS) to a modified control signal (MCS),
- sending the modified control signal (MCS) at the second signal port (14) to the emergency system (2) or stop sending the control signal (CS) at the second signal port (14) at a first moment (T1), such that the emergency system (2) detects an emergency and stops the fluid transport from the first reservoir (5) to the second reservoir (6) by closing the emergency valve (7),
- evaluating the first metering signal (MS1) received from the metering device (3) during the first moment (T1) and a second moment (T2) at which the emergency valve (7) is completely closed.

8. Evaluation method according to claim 7 in combination with claim 3, wherein the step of stop sending the control signal (CS) at the second signal port (14) of the evaluation device (10) to the emergency system (2) is performed by opening the first switch (26).

9. Evaluation method according to claim 7 or 8 in combination with claim 2, wherein the evaluation method comprises a step of
- displaying on the first display (22) a first incremented metering signal (S1) representing a quantity of measured fluid between the first moment (T1) and the second moment (T2).
